# EUROPÄISCHE PATENTANMELDUNG

(11) **EP 0 748 989 A1**
(43) Veröffentlichungstag der Anmeldung: **18.12.1996**
(21) Anmeldenummer: 96109229.3
(22) Anmeldetag: 08.06.1996
(51) Int. Cl.: F24D 11/02

(54) **Heiz- und Warmwasseranlage für Gebäude ohne befestigbaren thermoisolierenden Aussenwanddämmschutz**

(30) Priorität: 09.06.1995 DE 19521054
(71) Anmelder: Henke Elektroanlagen GmbH & Co. KG, 01159 Dresden (DE)
(72) Erfinder: Henke, Hans-Christian, 01219 Dresden (DE)
(74) Vertreter: Hempel, Hartmut, Dipl.-Phys.

(57) **Zusammenfassung**

Die Erfindung betrifft eine Heiz- und Warmwasseranlage für Gebäude ohne befestigbaren thermoisolierenden Außenwanddämmschutz, insbesondere für sanierungsbedürftige Altbauten, vorzugsweise denkmalgeschützte Häuser od.dgl., im wesentlichen enthaltend eine Wärmepumpe (1), einen Wärmepumpenregler (25), eine Energieversorgungseinrichtung (22), einen Warmwasserspeicher (26) und gegebenenfalls einen Pufferspeicher (27) sowie eine der Wärmepumpe (1) zugeordnete absorptionsmittelführende Vorschaltanlage (2) mit mindestens einem Wärmeabsorber (4) und einer Wärmeabführungseinrichtung (5) mit einem Wärmetauscher (23).
Es besteht die Aufgabe, die Außenfassaden der Gebäude beizubehalten und das Mauerwerk vor Temperaturschwankungen durch eine verbesserte Vorschaltanlage im Gebäude zu schützen. Die Lösung besteht darin, daß an mindestens einer Innenwand (11) des außenwanddämmschutzfreien Mauerwerks (6) mindestens ein Wärmeabsorber (4) gehaltert befestigt und eine beabstandete Dämmschicht (8) verkleidend angebracht ist, die zur jeweiligen Innenwand (11) einen den Wärmeabsorber (4) einschließenden Absorptionsraum (16) ausbildet, in dem mindestens ein temperaturempfindlicher Sensor (39) enthalten ist, der mit dem Wärmepumpenregler (25) zur Konstanthaltung einer vorgegebenen Temperatur im Absorptionsraum (16) in Verbindung steht.

## Beschreibung

Die Erfindung betrifft eine Heiz- und Warmwasseranlage für Gebäude ohne befestigbaren thermoisolierenden Außenwanddämmschutz, vorzugsweise für denkmalgeschützte Bauten, Häuser od.dgl., im wesentlichen enthaltend eine Wärmepumpe, einen Wärmepumpenregler, eine Energieversorgungseinrichtung, einen Warmwasserspeicher und gegebenenfalls einen Pufferspeicher sowie Pumpen, Ventile und Sensoren, die mittels Rohr- bzw. elektrischer Leitungen entsprechend zugeordnet verbunden sind, wobei die Wärmepumpe im wesentlichen aus einem Verdampfer, einem Verdichter für ein Arbeitsmedium, einem Verflüssiger und einer Expansionseinrichtung besteht, die in der genannten Reihenfolge in einem Wärmepumpenkreislauf miteinander verbunden sind, wobei das Arbeitsmedium verschiedenen Aggregatzuständen unterworfen ist, und der Wärmepumpe eine absorp- tionsmittelführende Vorschaltanlage mit mindestens einem Wärmeabsorber und einer Wärmeabführungseinrichtung mit einem Wärmetauscher, der mit dem Verdampfer in engem Kontakt steht, zugeordnet ist.

Eine derartig ausgebildete Wärmepumpe für sanierungsbedürftige Altbauten ist bekannt, die eine absorptionsmittelführende Vorschaltanlage zum Heizwärmebezug und -transport aufweist. Dabei sind verschiedene Vorschaltanlagen mit die Heizwärme absobierenden Wärmeabsorbern, insbesondere mit Erdabsorbern untererdig rings um das Gebäude oder mit einem Grundwasserabsorber unter Verwendung zweier Brunnen bekannt. Auch Kollektoren am Grunde fließenden Wassers, z.B. in Bächen, sind einsatzfähig als Absorber ausgebildet.

Eine günstige Voraussetzung für den vorzugsweisen Einsatz von Wärmepumpen ist unter anderem, daß das jeweils äußere Mauerwerk entweder durch einen Außen- oder Innenwanddämmschutz im wesentlichen thermoisoliert ist und demzufolge der Wärmeverlust gering gehalten wird. Aber weder ein Außenwanddämmschutz noch Innenwanddämmaßnahmen werden den Anforderungen an die sanierungsbedürftigen Altbauten, insbesondere den denkmalgeschützten Gebäuden gerecht. Nur für wenige Altbauten ist einer der beiden Dämmschutzmaßnahmen möglich, wobei dann immer noch für die Durchführung die Wirtschaftlichkeit einer solchen Maßnahme oder die kulturhistorische Bedeutung eines solchen Gebäudes Gründe sind, von einer thermoisolierenden Außenwanddämmschicht abzusehen.

Bei älteren, vor allem denkmalgeschützten Gebäuden sollen die Außenfassaden im wesentlichen so erhalten bleiben, wie sie ursprünglich baulich außenansichtig ausgeführt wurden. Notwendige Säuberungen, Verfugungen bzw. holz- bzw. putzerhaltende Maßnahmen werden zwar durchgeführt, was auch notwendig ist, aber eine zusätzliche Isolation des Mauerwerks durch an der Außenwand befestigte, vorzugsweise auf das Außenmauerwerk verdübelte, verklebte Dämmplatten wird seitens der Denkmalpflege als sehr problematisch angesehen und weitgehend verworfen.

Wenn demzufolge an der Außenwand keine Dämmplatten angebracht werden können, erscheint es natürlich, an die Innenwände des Mauerwerks die Dämmplatten anzubringen, anzukleben od.dgl., um den Innenraum vor allzu stark schwankenden Temperatureinflüssen von außerhalb des Gebäudes und vor Wärmeverlusten nach außerhalb zu schützen.

Bei reiner Innendämmung wird aber das schon zum Teil überaltete Mauerwerk den jahreszeitlichen Temperaturschwankungen weiterhin unterliegen, die letztlich zum weiteren Substanzabbau des Mauerwerks beitragen werden. Im Sommer führen die im Mauerwerk auftretenden Wärmestaus zu Dehnungen und Spannungen im jeweiligen Mauerwerk, denen der ursprüngliche Mörtel und die vorhandenen Bausteine langfristig nicht widerstehen können. Andererseits wird durch die mikroskopischen Spannungsbewegungen in den Ziegeln, im Sandsteinrandbereich, im Mörtel od.dgl. die Bausubstanz noch poröser, so daß unter anderem die Feuchtigkeitsaufnahme des Mauerwerks vergrößert wird. Bei Temperaturen um und unterhalb des Gefrierpunktes wird dann zu anderen Jahreszeiten das Mauerwerk durch mögliche Eisbildungen in den entstandenen Poren weiter, wenn auch nicht makroskopisch, so aber mikroskopisch zerstört, was über längere Zeit doch zu Schäden in größerem Ausmaße führen kann. So ist in einer kalten Jahreszeit ein großer Wärmeverlust und im Sommer eine große Wärmeaufnahme im Gebäude zu erwarten, die jeweils in ausgleichender Weise von einem älteren Mauerwerk nicht mehr bewältigt werden können.

Der Erfindung liegt deshalb die Aufgabe zugrunde, eine Heiz- und Warmwasseranlage für Gebäude ohne befestigbaren thermoisolierenden Außenwanddämmschutz anzugeben, in der die an den Innenwänden des Gebäudemauerwerks vorhandene Wärme kontrolliert und weitgehend verlustlos genutzt werden kann. Eine weitere Aufgabe besteht darin, daß ausgleichend die Wärmeverhältnisse am Mauerwerk außenwand- und innenwandtemperaturentsprechend geregelt werden können, um insbesondere die denkmalgeschützten, von der Bausubstanz her wenig gedämmten bzw. weitgehend die notwendige Dämmung verlorenen Gebäude unter anderem bewohnbar zu machen und bewohnbar zu halten, wobei die Außenwandfassaden weitgehend originalgetreu erhalten bleiben sollen.

Die Aufgabe wird dadurch gelöst, daß in der erfindungsgemäßen Heiz- und Warmwasseranlage an mindestens einer Innenwand (11) des außenwanddämmschutzfreien Mauerwerks mindestens ein Wärmeabsorber gehaltert befestigt ist und eine beabstandete Dämmschicht verkleidend angebracht ist, die zur jeweiligen Innenwand einen den Wärmeabsorber einschließenden Absorptionsraum ausbildet, in dem mindestens ein temperaturempfindlicher Sensor enthalten ist, der mit dem Wärmepumpenregler zur Konstanthaltung einer vorgegebenen Temperatur im Absorptionsraum verbunden ist.

Der Wärmepumpenregler ist mit mindestens einem weiteren temperaturempfindlichen Sensor, insbesondere mit mindestens einem außenwandig vorzugsweise am Mauerwerk angeordneten Sensor und wahlweise mit anderen Sensoren, insbesondere einem Rücklauffühler über elektrische Signalvermittlungsleitungen verbunden ist.

Die Sensoren signalisieren die jeweiligen Ist-Temperaturen an den Wärmepumpenregler, der bis zum Erreichen der jeweiligen vorgegebenen Soll-Temperaturen Pumpen ein- und/oder abschaltet und eine zeitbezogene Durchflußmenge des Absorptionsmittels in dem Wärmeabsorber des Absorptionsraums einstellt.

Der Absorptionsraum ist vorzugsweise ein weitgehend hohler Raum, in dem sich der Wärmeabsorber befindet.

Der am Mauerwerk installierte Wärmeabsorber besteht insbesondere aus einem vorzugsweise mäanderförmigen Kollektor- bzw. Rohrleitungssystem oder aus einem durch mindestens eine Rohrleitung verbundenen Plattensystem od.dgl., wobei das höher temperierte Absorptionsmittel im Wärmeabsorber über die Wärmeabführungseinrichtung zu deren Wärmetauscher an den Verdampfer der Wärmepumpe geführt ist und dort einen Wärmetausch durchführt.

Die den jeweiligen Innenraum begrenzende Dämmschicht des Absorptionsraumes besteht aus mindestens einem thermoisolierenden Material, insbesondere aus einer Schicht von Mineralwolle oder aus wärmeisolierendem Polystyrol in Form von Platten oder makroskopischer anderer Struktur od.dgl, aus mindestens einer Folie aus Polyäthylen und aus mindestens einer Gipskartonschale bzw. aus Gipskartonplatten in dieser Reihenfolge nacheinander hin zum Innenraum angeordnet.

Der Kontakt zwischen dem Verdampfer und der Wärmeabführungseinrichtung ist vorzugsweise direkt als Integration des Verdampfers in einem Absorptionsmittel-Speicherbehälter der Wärmeabführungseinrichtung ausgeführt.

Ein indirekter Kontakt zwischen Verdampfer und der Wärmeabführungseinrichtung besteht derart, daß der Wärmetauscher der Wärmeabführungseinrichtung beispielsweise in Form einer Rohrleitungsspirale um den Verdampfer engkontaktig, insbesondere berührend angeordnet ist.

Der Wärmeabsorber und der thermoisolierende Dämmstoff können zu einer integrierten Platte zusammengefügt sein, die an mindestens eine zweite derart gleichartig integriert ausgeführte Platte sowohl baulich als auch rohrleitungsmäßig anschließbar ist, wobei der Wärmeabsorber spaltbeabstandet vom Dämmstoff in der Platte gehaltert ist und an der Innenwand des außenwanddämmschutzfreien Mauerwerks befestigt ist.

Die Vorschaltanlage besteht im wesentlichen aus dem Wärmeabsorber, mindestens einer Anlagenpumpe, mindestens einem Rückschlagventil und den Wärmetauschern für Verdampfer und Verflüssiger der Wärmepumpe, wobei die Wärmetauscher je nach vorhandenen Ist-Temperaturen und vorgegebenen Soll-Temperaturen vom Wärmepumpenregler geschaltet werden.

Der Wärmeabsorber ist an der Innenwand des Mauerwerks fest installiert und zum jeweiligen Innenraum des Gebäudes mit einer plan ausgebildeten, vorzugsweise plattenförmigen Dämmschicht verkleidet.

Das den Wärmeabsorber bildende mäanderförmige Kollektor- bzw. Rohrleitungssystem ist im wesentlichen über die gesamte Wandfläche des zu einem Innenraum gehörenden gebäudeaußenwandigen Mauerwerks geführt.

Der Wärmeabsorber kann auch aus Wärmetauscherrohren, insbesondere aus mindestens zwei Sammelrohren mit zwischenliegenden, parallel zueinander gerichteten Flachrohren bestehen, so daß durch die große Oberfläche reichlich Wärme aufgenommen und als Heizwärme zur Verfügung gestellt werden kann.

Die rohrleitungsmäßigen Anschlüsse zwischen den integrierten Platten sind als flexible Leitungen ausführbar. Die rohrleitungsmäßigen Anschlüsse der Vorschaltanlage zur Wärmepumpe sind vorzugsweise auch mit flexiblen Leitungen ausgeführt.

Das wärmeabsorbierende und -tauschende Absorptionsmittel in der Vorschaltanlage kann ein flüssiges Mittel, vorzugsweise Wasser, Sole od.dgl. oder ein gasförmiges Mittel, vorzugsweise Gas, Inertgas, Luft od.dgl. sein.

Das Verfahren zur Wärmeaufnahme und Wärmeabführung in die Wärmepumpe, die die Heiz- und Warmwasseranlage in einem Gebäude ohne befestigbaren Außenwanddämmschutz im wesentlichen trägt, erfolgt derart, daß die an der Innenwand eines Mauerwerks vorhandene Wärme als Heizwärme für die Wärmepumpe dient. Die Heizwärme, die durch die im Gebäude nach außen abgebbare Wärme als auch durch die von außen auf das Mauerwerk auftreffende, insbesondere durch Sonneneinstrahlung als sich stauende Wärme entsteht, wird durch den gebäudeinternen, absorptionsmittelführenden Wärmeabsorber absorbiert und über die gebäudeinterne, zugeordnete Vorschaltanlage über den Wärmetauscher durch einen Wärmetausch der Wärmepumpe zugeführt.

Die Erfindung eröffnet die Möglichkeit, die aus den Räumen eines Gebäudes nach außen durch das Mauerwerk strömende Gebäudeabwärme der Wärmepumpe zur wiederholten Energieverwendung zuzuführen und somit eine Energieeinsparung zu erreichen.

Die Erfindung ermöglicht somit im wesentlichen eine Verringerung der laufenden Energiekosten. Neben einer kostengünstigen Wärmeenergierückgewinnung ist auch eine kostengünstige Warmwasseraufbereitung erreichbar.

Ein weiterer Vorteil besteht auch darin, daß nicht nur innenräumliche Seitenwände von gebäudeaußenwandigem Mauerwerk, sondern auch Fußboden und Decken in den erfindungsgemäßen Temperaturausgleich im Absorptionsraum am Mauerwerk einbezogen werden können.

Insgesamt wird eine verbesserte Wohnraumkultur ermöglicht, da auch im Sommer die Innenräume vor sonneneinstrahlungsbedingter Überhitzung und Wärmestaus geschützt sind.

Durch die Erfindung ist es desweiteren möglich, die im zwischen dem Mauerwerk und der Dämmschicht vorhandenen Absorptionsraum vorhandene Temperatur in einem bestimmten Toleranzbereich konstant zu halten. Dazu ist es zweckmäßig, die Durchflußgeschwindigkeit der Flüssigkeit in der Vorschaltanlage zur Wärmepumpe variabel einstellbar auszuführen, was durch den Wärmepumpenregler veranlaßt werden kann.

Die Erfindung wird anhand eines Ausführungsbeispiels mittels mehrerer Zeichnungen näher ausgeführt.

Es zeigen:
- Fig. 1: eine schematische Darstellung einer erfindungsgemäßen Heiz- und Warmwasseranlage mit einer Wärmepumpe mit zugehöriger absorptionsmittelführender, gebäudeinterner Vorschaltanlage,
- Fig. 2: eine schematische Darstellung des befestigten Wärmeabsorbers mit isolierender Dämmschicht an der Innenwandseite eines gebäudeaußenwandigen Mauerwerks und
- Fig. 3: eine schematische Darstellung der Wärmepumpe mit angeschlossener Vorschaltanlage, deren Wärmeabsorber an der Innenwandseite des Mauerwerks befestigt ist.

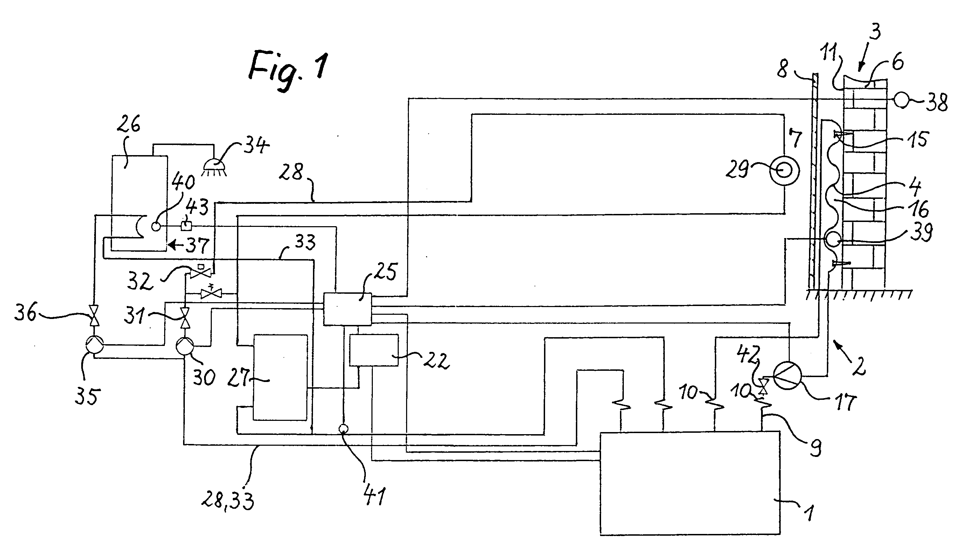

In Fig. 1 ist eine schematische Darstellung einer erfindungsgemäßen Heiz- und Warmwasseranlage beispielsweise in einem denkmalgeschützten Gebäude 3 gezeigt. Die Heiz- und Warmwasseranlage besteht im wesentlichen aus der Wärmepumpe 1, einem Wärmepumpenregler 25, einer Energieversorgungseinrichtung 22 und einem Warmwasserspeicher 26, wobei gegebenenfalls bei vorzugsweiser bivalenter monoenergetischer Betriebsart ein Pufferspeicher 27 mit mindestens einem Elektroheizstab in den Heiz- und Warmwasserkreislauf 28,33 einbaubar ist. Die Verbindungen zwischen diesen Teilen sind im wesentlichen flüssigkeitsführende Rohrleitungen oder elektrische Leitungen zur Energieversorgung bzw. Signalvermittlung.

Sowohl der Heizkreislauf 28 mit dem angeschlossenen Verbraucher 29 enthält im wesentlichen eine Heizkreislaufpumpe 30 mit einem Rückschlagventil 31 und einem Thermostatventil 32 als auch der Warmwasserkreislauf 33 mit seinem Verbrauchergerät 34 besitzt eine Wasserkreislaufpumpe 35 mit einem Rückschlagventil 36 und einem Warmwasserregler 43.

Der Kaltwasserzulauf 37 erfolgt hauptsächlich über den Warmwasserspeicher 26.

Die erfindungsgemäße absorptionsmittelführende Vorschaltanlage 2 in Fig. 1 besteht im wesentlichen aus dem Wärmeabsorber 4 und aus der Wärmeabführungseinrichtung 5. Die Vorschaltanlage 2 befindet sich erfindungsgemäß innerhalb des Gebäudes 3. Der absorptionsmitteldurchströmte Wärmeabsorber 4 ist vorzugsweise an der Innenwand 11 des gebäudeaußenwandigen Mauerwerks 6 installiert und zum Innenraum 7 des Gebäudes 3 mit einer thermoisolierenden, vorzugsweise plattenförmigen Dämmschicht 8 verkleidet.

Der am Mauerwerk 6 befestigte Wärmeabsorber 4 besteht vorzugsweise aus einem mäanderförmigen Kollektor- bzw. Rohrleitungssystem bzw. aus einem Plattensystem, deren Platten, Radiatoren od.dgl. durch eine entsprechende Leitung miteinander verbunden sind, wobei der Wärmeabsorber 4 über die Wärmeabführungseinrichtung 5 an den Verdampfer 18 der Wärmepumpe 1 geführt ist und dort einen Wärmetausch durchführen kann. In engem Kontakt mit dem Verdampfer 18 steht der zur Wärmeabführungseinrichtung 5 gehörende Wärmetauscher 23, der z.B. als spiralförmig umgebende Rohrleitung oder als anliegendes Wärmetauscherrohr mit mindestens zwei Sammelrohren und zugehörigen Flachrohren ausgebildet sein kann.

Der Wärmeabsorber 4, das insbesondere mäanderförmige Kollektor- bzw. Rohrleitungssystem oder das Platten- oder Radiatorensystem ist hauptsächlich an den Innenwänden 11 des gebäudeaußenwandigen Mauerwerks 6 befestigt. Aber auch an den Decken und den Fußböden sowie anderen Innenwänden des Mauerwerks 6 des Gebäudes 3 können weitere Wärmeabsorber 4 erfindungsgemäß angebracht sein. Die Anschlüsse der Wärmeabführungseinrichtung 5 zur Wärmepumpe 1 können zweckmäßigerweise als flexible Anschlußleitungen 10 ausgebildet sein, um auch eine Schalldämmung schlechthin zu erreichen.

Das mäanderförmige Kollektor- bzw. Rohrleitungssystem 4 kann zur Installation im wesentlichen über die gesamte Innenwand 11 des zu einem Innenraum 7 gehörenden außenwandigen Mauerwerks 6 verteilt befestigt sein.

Der Wärmeabsorber 4 kann andererseits auch aus mindestens zwei Sammelrohren mit zwischenliegenden, parallel zueinander gerichteten, voneinander beabstandeten Flachrohren bestehen. Die absorptionsmitteldurchströmte Wärmeabführungseinrichtung 5 enthält eine Vorschaltanlagenpumpe 17 und ein Rückschlagventil 42 sowie mindestens eine Rohrleitung 9, die thermisch isoliert ist und mit dem Verdampfer 18 der Wärmepumpe 1 in engem Kontakt steht, wobei die Vorschaltanlagenpumpe 17 das erwärmte Absorptionsmittel aus dem Wärmeabsorber 4 zum Wärmetauscher 23 am Verdampfer 18 pumpt. Auch der Verflüssiger 20 ist über einen Wärmetauscher 33 mit der Vorschaltanlage 2 umschaltbar verbunden.

Der Wärmepumpenregler 25 ist mit mehreren temperaturempfindlichen Sensoren, insbesondere mit mindestens einem außenwandig vorzugsweise am Mauerwerk 6 angeordneten Sensor 38, mit mindestens einem innenwandigen Sensor 39 im Absorptionsraum 16 und einem Warmwassersensor 40 sowie einem Rücklauffühler 41 über elektrische Signalvermittlungsleitungen verbunden. Die Sensoren 38 bis 40 signalisieren die jeweiligen Ist-Temperaturen, so daß der Wärmepumpenregler 25 durch eingreifendes Ein- und Abschalten der jeweiligen Pumpen 30,35,17 und insbesondere des Verdichters 19 im Wärmepumpenkreislauf 24 die Heiz- und Warmwasseranlage bis zum Erreichen der jeweiligen vorgegebenen Soll-Temperaturen kontrollieren und anfahren kann.

Kann die Wärmepumpe 1 den Wärmebedarf des Gebäudes 3 nicht allein befriedigen, so wird die Bedarfsspitze mit einem zweiten Wärmeerzeuger, vorzugsweise mit einem Elektroheizstab, der im Pufferspeicher 27 installiert ist, abgedeckt. Durch eine vorzugsweise zusätzliche elektronische Steuerung im Wärmepumpenregler 25 ist hierbei sichergestellt, daß der zweite Wärmeerzeuger im Pufferspeicher 27 nicht länger in Betrieb ist als unbedingt notwendig.

Bei einer Wärmeanforderung schaltet sich die Wärmepumpe 1 ein und heizt allein. Reicht die Leistung der Vorschaltanlage 2 nicht mehr aus, schaltet der Wärmepumpenregler 25 den Elektroheizstab im Pufferspeicher 27 ein. Solange die Außentemperatur über der Einsatzgrenztemperatur der Wärmepumpe 1 liegt, heizen somit beide Wärmeerzeuger im Parallelbetrieb. Unterhalb der Einsatzgrenztemperatur wird die Wärmepumpe 1 abgeschaltet und der Elektrostab übernimmt die Wärmeversorgung.

Dadurch, daß die Dämmschicht 8 doch eine gewisse Wärmedurchlässigkeit aufweist, besitzt der vorzugsweise hohle Absorptionsraum 16 eine Raumtemperatur, die wesentlich über der unteren Einsatzgrenztemperatur liegt, so daß die Vorschaltanlage 2 noch genügend Wärme an die Wärmepumpe 1 liefern kann, um die Heiz- und Warmwasserkreisläufe 28,33 zu unterstützen. Meldet der temperaturempfindliche Sensor 39 aus dem Absorptionsraum 16 zu hohe Temperaturen, dann schaltet der Wärmepumpenregler 25 wieder auf Alleinbetrieb der Wärmepumpe 1 und setzt gleichzeitig die Pumpe 17 der gebäudeinternen Vorschaltanlage 2 derart in Gang, daß die Durchflußleistung im Wärmeabsorber 4 erhöht wird, um den möglichen Wärmestau am Mauerwerk 6 nicht erst entstehen zu lassen.

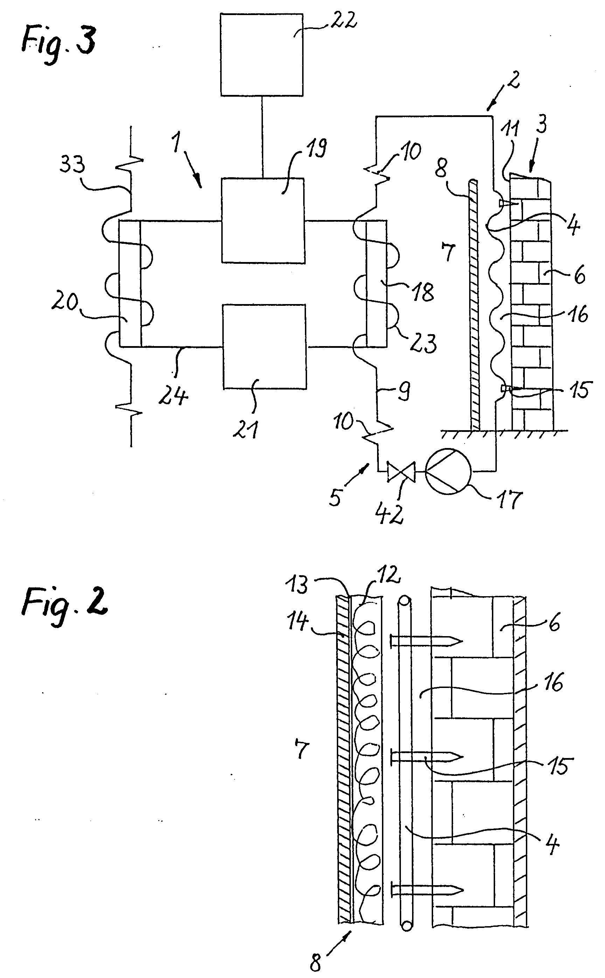

In Fig. 2 ist die zum jeweiligen Innenraum 7 angrenzende Dämmschicht 8 dargestellt, die aus mindestens einem thermoisolierenden Material, insbesondere aus einer Schicht Mineralwolle 12, mindestens einer Folie 13 aus Polyäthylen und aus mindestens einer Gipskartonschale 14 in dieser Reihenfolge nacheinander vom Wärmeabsorber 4 aus zum Innenraum 7 angeordnet besteht. Auch zusammensetzbare Gipskartonplatten können als Dämmstoffmaterial eingesetzt werden.

Anstelle einer Mineralwolle-Schicht 12 kann wärmeisolierendes Polystyrol in Form von Platten oder in makroskopischer anderer Struktur eingesetzt sein.

Die Befestigung der Rohrleitungen bzw. Platten des Wärmeabsorbers 4 erfolgt beispielsweise mit Rohrschellen und zugehörigen Schrauben 15, die in das Mauerwerk 6 eindrehbar sind und das Rohrleitungs- und Plattensystem 4 vorzugsweise in einem Absorptionshohlraum 16 zwischen der plattenförmigen Dämmschicht 8 und dem Mauerwerk 6 haltern.

Die Wärmepumpe 1 ist in Fig. 3 schematisch dargestellt und enthält neben dem Verdampfer 18, einen Verdichter 19, einen Verflüssiger (Kondensator) 20 und eine Expansionseinrichtung 21, die zu einem rohrleitungsverbindenden Pumpenkreislauf 24 in der genannten Reihenfolge miteinander verbunden sind. An den Verdichter 19 ist eine Energieversorgungseinrichtung 22, vorzugsweise ein Elektromotor angeschlossen, der relativ wenig Energie zur Verflüssigung des verdampften Arbeitsmediums im Wärmepumpenkreislauf 24 aufwendet.

Im vorliegenden Ausführungsbeispiel besteht ein indirekter Kontakt zwischen dem Verdampfer 18 und dem Wärmetauscher 23 der Wärmeabführungseinrichtung 5 derart, daß der Wärmetauscher 23 beispielsweise in Form einer Rohrleitungsspirale um den Verdampfer 18 gewendelt ist.

Der Kontakt zwischen dem Verdampfer 18 und dem Wärmetauscher 23 der Wärmeabführungseinrichtung 5 kann auch direkt als Integration des Verdampfers 18 in einem Absorptionsmittel-Speicherbehälter (nicht eingezeichnet) der Wärmeabführungseinrichtung 5 ausgeführt sein.

Der Wärmeabsorber 4 und der thermoisolierende, plattenförmige Dämmstoff 8 können gegebenenfalls zu einer baulich integrierten Platte zusammengefügt sein, die an mindestens eine zweite derart gleichartig ausgeführte, integrierte Platte sowohl baulich als auch rohrleitungsmäßig anschließbar ist.

Die rohrleitungsmäßigen Anschlüsse zwischen den integrierten Platten sind vorteilhafterweise auch durch flexible Leitungen ausführbar. Im allgemeinen sind überhaupt flexible Anschlußleitungen an die einzelnen Baueinheiten von schalldämmendem Vorteil.

Das wärmeabsorbierende und -tauschende Absorptionsmittel in der erfindungsgemäßen Vorschaltanlage 2 kann hauptsächlich ein flüssiges Mittel, z.B. Wasser, Salzlösung oder mit speziellen Additiven (Frostschutzmittel) angereichertes Wasser sein. Aber auch als ein gasförmiges Mittel, z.B. Inertgas oder Luft kann das Absorptionsmittel eingesetzt werden.

Im folgenden wird die Arbeitsweise der erfindungsgemäßen Heiz- und Warmwasseranlage mit einer Wasser-Wasser-Wärmepumpe 1 und zugehöriger erfindungsgemäßer Vorschaltanlage 2 näher beschrieben:

Das erfindungsgemäße Verfahren zur Wärmeabsorption und Wärmeabführung hin zu dem Verdampfer 18 der Wärmepumpe 1, die den Heiz- und Warmwasserkreislauf 28,33 des Gebäudes 3 im wesentlichen trägt, erfolgt derart, daß die an der Innenwandseite 11 des Mauerwerks 6 in dem Absorptionsraum 16 vorhandene Heizwärme, die sowohl durch die im Gebäude 3 nach außen strömende Wärme als auch durch die von außen auftreffende Wärme, insbesondere durch Sonneneinstrahlung entsteht, durch den Wärmeabsorber 4 der Vorschaltanlage 2 absorbiert und der Wärmepumpe 1 zugeführt wird.

Die Absorption der Heizwärme erfolgt dabei im Absorptionsraum 16, insbesondere in einem weitgehend hohlen Absorptionsraum durch den dort vorhandenen Wärmeabsorber 4. Das die Heizwärme aufnehmende Absorptionsmittel Wasser wird in der Rohrleitung 9 und schließlich in der Rohrleitungsspirale 23 zum Verdampfer 18 der Wärmepumpe 1 transportiert, der durch den direkten bzw. indirekten Kontakt mit dem Wasser diesem die Heizwärme entzieht und auf das im Wärmepumpenkreislauf 24 enthaltene Arbeitsmedium überträgt. Durch die Wärmezufuhr geht das Arbeitsmedium im Verdampfer 18 in den gasförmigen Zustand über. Anschließend wird es verdichtet und im Verflüssiger 20 verflüssigt. Dabei gibt es die Heizwärme an das Warmwasser des Heiz- und Warmwasserkreislaufes 28,33 ab. Danach wird das Arbeitsmedium entspannt und wieder verdampft, der Kreislauf der Aggregatszustandsänderungen in der Wärmepumpe 1 beginnt von neuem. Betrieben wird die Wärmepumpe durch die Energieversorgungseinrichtung 22. D.h. der Antrieb des Pumpenkreislaufs 24 erfolgt im wesentlichen durch einen Elektromotor. Neben dem heißen Heizwasser für den Heizkreislauf ist dazu je nach Einschaltung der Pumpen 30,35,17 und des Verdichters 19 auch Warmwasser für den Warmwasserspeicher 26 bereitstellbar.

Um die Temperatur im Absorptionsraum 16 in einem bestimmten Toleranzbereich konstant zu halten, kann die Vorschaltanlage 2 auch mit einem größeren Vorlaufspeicher mit Wasser niedriger Temperatur vor dem Wärmeabsorber 4 und einem Nachlaufspeicher mit Wasser höherer Temperatur nach dem Wärmeabsorber 4 versehen sein, so daß eine vorgegeben variable Menge kälteren Wassers in einer Zeiteinheit durch den Wärmeabsorber 4 förderbar und als wärmeres Wasser im Nachlaufspeicher reservierbar ist. Beide Speicher sind in der Fig. 1 nicht eingezeichnet.

Der Ablauf in der Wärmepumpe 1 wird im wesentlichen von dem Wärmepumpenregler 25 betreut, der mit dem temperaturempfindlichen Sensor 38 an der Außenwand außerhalb des Gebäudes 3 und erfindungsgemäß mit dem temperaturempfindlichen Sensor 39 im vorzugsweise hohlen Absorptionsraum 16 verbunden ist. Somit ist über den Wärmepumpenregler 25 und der mit ihr verbundenen Energieversorgungseinrichtung 22 auch die Vorschaltanlagenpumpe 17 ein- und ausschaltbar, so daß die Durchflußmenge des wärmeabsorbierenden Wasser durch das Kollektor- bzw. Rohrleitungssystem des Wärmeabsorbers 4 hindurch veränderlich einstellbar ist. Damit und gegebenenfalls mit dem Vorlauf- und dem Nachlaufspeicher ist auch der gewünschte Temperaturtoleranzbereich im Absorptionsraum 16 erreichbar und einstellbar.

Wird die Wasser-Wasser- bzw. Sole-Wasser-Wärmepumpe mit der erfindungsgemäßen Vorschaltanlage 2 zu einem Niedertemperaturheizungssystem in den sanierungsbedürftigen Altbauten bzw. denkmalgeschützten Gebäuden kombiniert installiert, kann unter Umständen auf den Pufferspeicher 27 verzichtet werden und die Wärmepumpe 1 verrichtet alle Heizaufgaben und die Warmwasseraufbereitung allein.

### Bezugszeichenliste

- 1: Wärmepumpe
- 2: Vorschaltanlage
- 3: Gebäude
- 4: Wärmeabsorber
- 5: Wärmeabführungseinrichtung
- 6: Mauerwerk
- 7: Innenraum
- 8: Dämmschicht
- 9: Rohrleitung
- 10: Anschlußleitung
- 11: Innenwand
- 12: Schicht Mineralwolle
- 13: Folie
- 14: Gipskartonschale
- 15: Schraube
- 16: Absorptionsraum
- 17: Vorschaltanlagenpumpe
- 18: Verdampfer
- 19: Verdichter
- 20: Verflüssiger
- 21: Expansionseinrichtung
- 22: Energieversorgungseinrichtung
- 23: Wärmetauscher
- 24: Wärmepumpenkreislauf
- 25: Wärmepumpenregler
- 26: Warmwasserspeicher
- 27: Pufferspeicher
- 28: Heizkreislauf
- 29: Verbraucher
- 30: Pumpe
- 31: Rückschlagventil
- 32: Thermostatventil
- 33: Warmwasserkreislauf
- 34: Verbrauchergerät
- 35: Pumpe
- 36: Rückschlagventil
- 37: Kaltwasserzulauf
- 38: Sensor
- 39: Sensor
- 40: Warmwassersensor
- 41: Rücklauffühler
- 42: Rückschlagventil
- 43: Warmwasserregler

## Patentansprüche

1. Heiz- und Warmwasseranlage für Gebäude ohne befestigbaren thermoisolierenden Außenwanddämmschutz, insbesondere für sanierungsbedürftige Altbauten, vorzugsweise denkmalgeschützte Häuser od.dgl., im wesentlichen enthaltend eine Wärmepumpe (1), einen Wärmepumpenregler (25), eine Energieversorgungseinrichtung (22), einen Warmwasserspeicher (26) und gegebenenfalls einen Pufferspeicher (27) sowie Pumpen, Ventile und Sensoren, die mittels Rohr- bzw. elektrischer Leitungen entsprechend zugeordnet verbunden sind, wobei die Wärmepumpe (1) im wesentlichen aus einem Verdampfer (18), einem Verdichter (19) für ein Arbeitsmedium, einem Verflüssiger (20) und einer Expansionseinrichtung (21) besteht, die in der genannten Reihenfolge in einem Wärmepumpenkreislauf (24) miteinander verbunden sind, wobei das Arbeitsmedium verschiedenen Aggregatzuständen unterworfen ist, und der Wärmepumpe (1) eine absorptionsmittelführende Vorschaltanlage (2) mit mindestens einem Wärmeabsorber (4) und einer Wärmeabführungseinrichtung (5) mit einem Wärmetauscher (23), der mit dem Verdampfer (18) in engem Kontakt steht, zugeordnet ist, dadurch gekennzeichnet,
daß an mindestens einer Innenwand (11) des außenwanddämmschutzfreien Mauerwerks (6) mindestens ein Wärmeabsorber (4) gehaltert befestigt ist und eine beabstandete Dämmschicht (8) verkleidend angebracht ist, die zur jeweiligen Innenwand (11) einen den Wärmeabsorber (4) einschließenden Absorptionsraum (16) ausbildet, in dem mindestens ein temperaturempfindlicher Sensor (39) enthalten ist, der mit dem Wärmepumpenregler (25) zur Konstanthaltung einer vorgegebenen Temperatur im Absorptionsraum (16) verbunden ist.

2. Heiz- und Warmwasseranlage nach Anspruch 1, dadurch gekennzeichnet,
daß der Wärmepumpenregler (25) mit mindestens einem weiteren temperaturempfindlichen Sensor, insbesondere mit mindestens einem außenwandig vorzugsweise am Mauerwerk (6) angeordneten Sensor (38) und wahlweise mit anderen Sensoren, insbesondere einem Rücklauffühler (41) über elektrische Signalvermittlungsleitungen verbunden ist.

3. Heiz- und Warmwasseranlage nach einem der vorhergehenden Ansprüche, dadurch gekennzeichnet,
daß die Sensoren (38,39) die jeweiligen Ist-Temperaturen an den Wärmepumpenregler (25) signalisieren, der bis zum Erreichen der jeweiligen vorgegebenen Soll-Temperaturen Pumpen (30,35,17) ein- und/oder abschaltet und eine zeitbezogene Durchflußmenge des Absorptionsmittels in dem Wärmeabsorber (4) des Absorptionsraums (16) einstellt.

4. Heiz- und Warmwasseranlage nach einem der vorhergehenden Ansprüche, dadurch gekennzeichnet,
daß der Absorptionsraum (16) vorzugsweise ein weitgehend hohler Raum ist, in dem sich der Wärmeabsorber (4) befindet.

5. Heiz- und Warmwasseranlage nach einem der vorhergehenden Ansprüche, dadurch gekennzeichnet,
daß der am Mauerwerk (6) installierte Wärmeabsorber (4) insbesondere aus einem vorzugsweise mäanderförmigen Kollektor- bzw. Rohrleitungssystem oder aus einem durch mindestens eine Rohrleitung verbundenen Plattensystem od.dgl. besteht, wobei das höher temperierte Absorptionsmittel im Wärmeabsorber (4) über die Wärmeabführungseinrichtung (5) zu deren Wärmetauscher (23) an den Verdampfer (18) der Wärmepumpe (1) geführt ist und dort einen Wärmetausch durchführt.

6. Heiz- und Warmwasseranlage nach einem der vorhergehenden Ansprüche, dadurch gekennzeichnet,
daß die den jeweiligen Innenraum (7) begrenzende Dämmschicht (8) des Absorptionsraumes (16) aus mindestens einem thermoisolierenden Material, insbesondere aus einer Schicht (12) von Mineralwolle oder aus wärmeisolierendem Polystyrol in Form von Platten oder makroskopischer anderer Struktur od.dgl, aus mindestens einer Folie (13) aus Polyäthylen und aus mindestens einer Gipskartonschale (14) bzw. aus Gipskartonplatten in dieser Reihenfolge nacheinander hin zum Innenraum (7) angeordnet besteht.

7. Heiz- und Warmwasseranlage nach einem der vorhergehenden Ansprüche, dadurch gekennzeichnet,
daß der Kontakt zwischen dem Verdampfer (18) und der Wärmeabführungseinrichtung (5) direkt als Integration des Verdampfers (18) in einem Absorptionsmittel-Speicherbehälter der Wärmeabführungseinrichtung (5) ausgeführt ist.

8. Heiz- und Warmwasseranlage nach einem der vorhergehenden Ansprüche, dadurch gekennzeichnet,
daß ein indirekter Kontakt zwischen Verdampfer (18) und der Wärmeabführungseinrichtung (5) derart besteht, daß der Wärmetauscher (23) dar Wärmeabführungseinrichtung (5) beispielsweise in Form einer Rohrleitungsspirale um den Verdampfer (18) engkontaktig, insbesondere berührend angeordnet ist.

9. Heiz- und Warmwasseranlage nach einem der vorhergehenden Ansprüche, dadurch gekennzeichnet,
daß der Wärmeabsorber (4) und der thermoisolierende Dämmstoff (8) zu einer integrierten Platte zusammengefügt sind, die an mindestens eine zweite derart gleichartig integriert ausgeführte Platte sowohl baulich als auch rohrleitungsmäßig anschließbar ist, wobei der Wärmeabsorber (4) spaltbeabstandet vom Dämmstoff (8) in der Platte gehaltert ist und an der Innenwand (11) des Mauerwerks (6) befestigt ist.

10. Heiz- und Warmwasseranlage nach einem der vorhergehenden Ansprüche, dadurch gekennzeichnet,
daß die Vorschaltanlage (2) im wesentlichen aus dem Wärmeabsorber (4), mindestens einer Anlagenpumpe (17), mindestens einem Rückschlagventil (42) und den Wärmetauschern (23,33) für Verdampfer (18) und Verflüssiger (20) der Wärmepumpe (1) besteht, wobei die Wärmetauscher (23,33) je nach vorhandenen Ist-Temperaturen und vorgegebenen Soll-Temperaturen vom Wärmepumpenregler (25) geschaltet werden.
